# EUROPÄISCHE PATENTSCHRIFT

(11) **EP 0 503 320 B1**
(45) Veröffentlichungstag und Bekanntmachung des Hinweises auf die Patenterteilung: **20.12.1995**
(21) Anmeldenummer: 92102741.3
(22) Anmeldetag: 19.02.1992
(51) Int. Cl.: B27K 3/34, A01N 43/16, A01N 43/18

(54) **Mittel oder Konzentrat zum Konservieren von Holz- und Holzwerkstoffen gegenüber holzzerstörenden und/oder holzentwertenden und/oder celluloseabbauenden Organismen**
Agent or concentrate for the conservation of wood and wooden articles against wood destroying and/or wood degrading and/or cellulose degrading organisms
Agent ou concentré pour la conservation du bois et des objets en bois contre les organismes détruisant le bois et/ou dégradant le bois et/ou dégradant la cellulose

(30) Priorität: 13.03.1991 DE 4108071
(43) Veröffentlichungstag der Anmeldung: 16.09.1992
(73) Patentinhaber: DESOWAG GmbH, D-40476 Düsseldorf (DE)
(72) Erfinder: Pallaske, Michael, Dr., W-4152 Kempen 1 (DE); Wegen, Hans-Werner, Dr., W-4150 Krefeld (DE); Wüstenhöfer, Bettina, Dr., W-4150 Krefeld 1 (DE)
(74) Vertreter: Sparing - Röhl - Henseler Patentanwälte

(56) Entgegenhaltungen:
- GB-A- 1 554 117
- US-A- 3 932 625
- CHEMICAL ABSTRACTS, vol. 108, no. 2, 11. Januar 1988, Columbus, Ohio, US; abstract no. 7647Y, N Rama Rao et at: 'A nonconventional method of wood preservation' Seite 89
- CHEMICAL ABSTRACTS, vol. 92, no. 17, 28. April 1980, Columbus, Ohio, US; abstract no. 145258Z, K.SHAH ET AL: 'Biodegradation of paper bags by Aspergillus and Mucor species' Seite 460 ;
- EXPERIENTIA. Bd. 31, Nr. 10, 15. Oktober 1975, BASEL CH Seiten 1153 - 1155; R. F.SHARP: 'The Tolerance of Fungal Celulase and Amylase to some Wood Preservatives'
- CHEMICAL ABSTRACTS, vol. 79, no. 5, 6. August 1973, Columbus, Ohio, US; abstract no. 27839Y, J.VARADI: 'Effect of aromatic compounds on cellulase and xylanase production of fungi Schizophyllum commune and Chaetomium globosum' Seite 95 ;

## Beschreibung

Die Erfindung betrifft ein Verfahren sowie ein Mittel oder Konzentrat zum Konservieren von Holz, Holzwerkstoffen, Papier und anderen cellulosehaltigen Roh- und Werkstoffen gegenüber holzzerstörenden und/oder holzentwertenden und/oder celluloseabbauenden Organismen wie Pilze, Bakterien, Termiten, Insektenlarven und Insekten.

Es ist bekannt, in Mitteln oder Konzentraten, die zum Schutz von Holz bestimmt sind, insektizide und fungizide Werkstoffe mit relativ breitem Wirkungsspektrum einzusetzen, die meist für andere Einsatzgebiete entwickelt wurden, vgl. u.a. DE-OS 27 28 107 und DE-OS 36 13 548.

So stammen zum Beispiel sehr viele Fungizide aus dem Pflanzenschutz oder aus dem Bereich der papierverarbeitenden Industrie; die meisten insektiziden Wirkstoffe sind ebenfalls aus dem Pflanzenschutz oder aus dem Hygienebereich übernommen.

Holzzerstörende Organismen sind meist sehr hochspezialisierte, celluloseverdauende Nahrungsspezialisten. Derartige Nahrungsspezialisten können relativ einfach und meist hochselektiv bekämpft werden, wenn man den Mechanismus ihrer Spezialisierung blockiert oder umsteuert. Spezielle Holzschutz-Wirkstoffe, die zum Beispiel gezielt an physiologischen Schlüsselprozessen der Celluloseverdauung (Kohlenhydrat-Katabolismus) eingreifen, sind bislang unbekannt. Von in diese Prozesse eingreifenden Substanzen sollte daher eine hochselektive Wirksamkeit gegenüber holzzerstörenden Organismen, sowohl gegen Insekten als auch gegen Pilze, bei weitestgehender Schonung der nicht-celluloseverdauenden Organismen, erwartet werden können.

Die Veröffentlichung von R.K Atkin, D.M. Spencer und R.L. Wain in Ann. Appl. Biol. (1964), 53, Seiten 437 bis 443 befaßt sich mit der Untersuchung von Fungiziden, und zwar im Hinblick auf die fungizide Aktivität von 2-Deoxy-D-glucose (2-D-G). Gegenüber einigen der untersuchten Pilze bzw. ihren Sporen erwies sich 2-D-G als toxisch, andere blieben unbeeinflußt. Einer der untersuchten Mikroorganismen, Botrytis, ist ein Pflanzenschädling; in Bezug auf die Konservierung von Holz oder Holzwerkstoffen findet sich in der Veröffentlichung von Atkin et al. nichts.

Die Veröffentlichung von J. Varadi in Biodeterior. Mater., Proc. Int. Biodeterior. Symp., 2nd. 1971 (Publ. 1972), Seiten 129 bis 135 (Chemical Abstracts Bd 79, 1973, Nr. 27839y) offenbart, daß phenolische Verbindungen die Produktion extracellulärer Cellulase und Xylanase von S. commune unterdrücken. Aromatische Verbindung in Holzschutzmitteln inhibieren Wachstum und Enzymproduktion in C. globosum.

Die Veröffentlichung von R.F. Sharp in Experientia 31, Heft 10 (1975), Seiten 1153 bis 1355 beschäftigt sich mit der Toleranz von Pilzcellulase und -amylase gegenüber einigen Holzschutzmitteln. Untersucht wurden Natriumpentachlorphenolat, Tri-n-Butylzinnoxid und Kupferchromarsenat. Die Amylase- bzw. Cellulaseaktivität verschiedener Mikroorganismen in An- bzw. Abwesenheit der genannten Mittel ergab bezüglich der Veränderung kein einheitliches Bild. Ein Hinweis auf die Verwendung anderer als der drei genannten Substanzen befindet sich in der Veröffentlichung nicht.

Aufgabe der vorliegenden Erfindung war es somit, ein Verfahren zum Konservieren von Holz oder Holzwerkstoffen zu entwickeln, das mit möglichst wenig Nebenwirkungen für Mensch und Umwelt hochselektiv den Befall von Holz durch holzzerstörende und/oder holzentwertende Insekten und/oder Pilze verhindert. Eine weitere Aufgabe der vorliegenden Erfindung war es, ein Mittel oder Konzentrat anzugeben, welches vorteilhaft im Verfahren der vorliegenden Erfindung anwendbar ist.

Diese Aufgaben wurden durch das Verfahren bzw. das Mittel oder Konzentrat der Patentansprüche gelöst.

Das erfindungsgemäße Verfahren zum Konservieren von Holz, Holzwerkstoffen, Papier und anderen cellulosehaltigen Roh- und Werkstoffen gegenüber holzzerstörenden und/oder holzentwertenden und/oder celluloseabbauenden Organismen wie Bakterien, Pilzen, Termiten, Insektenlarven und Insekten, sieht vor, daß man ein Mittel oder Konzentrat verwendet, welches einen oder mehrere Glucose-Antimetaboliten ausgewählt aus der Gruppe umfassend 5-Thio-D-Glucose, 2-Deoxy-D-Glucose, Nojirimycin, Nojirimycinbisulfid, 1-Deoxy-Nojirimycin und p-Nitrophenyl-α-D-Glucosid in mono-, di- oder polymerer Form enthält.

Das erfindungsgemäße Mittel oder Konzentrat zur vorteilhaften Anwendung im erfindungsgemäßen Verfahren umfaßt einen oder mehrere Glucose-Antimetaboliten ausgewählt aus der Gruppe umfassend 5-Thio-D-Glucose, 2-Deoxy-D-Glucose, Nojirimycin, Nojirimycinbisulfid, 1-Deoxy-Nojirimycin und p-Nitrophenyl-α-D-Glucosid in mono-, di- oder polymerer Form, sowie zusätzlich einen oder mehrere Zusatzstoffe ausgewählt aus der Gruppe umfassend Cellulase-Inhibitoren, Hexokinase-Inhibitoren, Glucokinase-Inhibitoren, Amylase-Inhibitoren, insektizide Wirkstoffe, fungizide Wirkstoffe, herbizide Wirkstoffe, bakterizide Wirkstoffe, Bindemittel, Fixierungsmittel, Lösungsvermittler, Netzmittel und Emulgatoren.

Das anwendungsfertige Mittel enthält 0,001 bis 50 Gew.%, vorzugsweise 0,5 bis 10 Gew.% des Kohlenhydrat-Antimetaboliten oder -Antimetabolitengemisches, vorzugsweise des Glucose-Antimetaboliten oder -Antimetabolitengemisches und mehr als 40 Gew.%, vorzugsweise mehr als 80 Gew.% eines Lösemittels oder Verdünnungsmittels. Als Lösemittel werden bevorzugt Wasser und/oder polare organisch-chemische Lösemittel, beispielsweise Alkohole oder Glykole verwendet.

Das erfindungsgemäße Verfahren bzw. Mittel nutzt die den holzzerstörenden Organismen gemeinsame Eigenschaft, pflanzliche Struktur - Polysaccharide (Cellulose, Pektine usw.) als primäre Kohlenhydratquelle zu nutzen. Diese Struktur-Polysaccharide werden normalerweise enzymatisch (über diverse Cellulasen) in ihre Glucose-Untereinheiten gespalten und in dieser Form von dem holzzerstörenden Organismus aufgenommen. Der Transport der freien Glucose in den Organismus erfolgt hierbei weitestgehend passiv, aber selektiv, meist durch "erleichterte Diffusion". Da der Glucosetransport in den Organismus ein weitestgehend passiver Prozeß ist, gelangen auch die dem Holz erfindungsgemäß beigefügten Glucose-Antimetaboliten oder Glucose-Antimetabolitengemische unter Nutzung desselben Transportsystems in den Organismus des Holzzerstörers.

Im katabolen Stoffwechsel wird die Glucose zunächst zu Glucose-6-phosphat phoshoryliert und dient in dieser Form sowohl als wichtiger Inhibitor einer Vielzahl von Schlüsselenzymen (Hexokinase, Phosphorylase usw.), als auch als Startverbindung der Glycolyse (A.L. LEHNINGER, Biochemie, Verlag Chemie, Weinheim / New York, 1977; H. ZOLLNER, Handbook of Enzyme Inhibitors, VCH-Verlagsgesellschaft mbH, Weinheim, 1989). Die Strukturanalogie einiger Glucose-Antimetaboliten, z.B. der Thio-D-Glucose, geht so weit, daß - außer dem Einwärtstransport - auch noch die Phosphorylierung erfolgt. Spätestens nach der Phosphorylierung aber ist der Antimetabolit für die energieliefernden Abbauwege nicht mehr weiter nutzbar, während alle inhibitorischen und regulatorischen Eigenschaften, die weitestgehend denen der freien Glucose bzw. des Glucose-6-phosphat entsprechen, vollständig erhalten bleiben.

Die Glucose-Antimetaboliten treten also bereits ganz am Anfang des Kohlenhydratstoffwechsels in Konkurrenz zur Glucose und können von den meisten Organismen auch wieder direkt oder indirekt (als Glycoside) ausgeschieden werden. Ihre Wirksamkeit zeigen die Glucose-Antimetaboliten hier - bei hohen Dosierungen über längere Zeit - lediglich in stark teilungsaktiven Geweben mit hohem Energiebedarf. In derartig hochaktiven Geweben sind Glucose-Antimetaboliten in der Lage, das Wachstum von Krebszellen zu verlangsamen, siehe H. A. BALL et al, 1957, Influence of glucose antimetabolites on the Walker tumor, Cancer Research 17, 235-239.

Die Wirkung der Glucose-Antimetaboliten in Nahrungsspezialisten wie holzzerstörenden Insekten oder Pilzen, die Kohlenhydrate unter hohem Aufwand (Abbau von Cellulose usw.) gewinnen müssen, ist jedoch völlig anders. Diese Organismen haben ihren Kohlenhydrathaushalt stark optimiert und verfügen daher in der Regel über keine Möglichkeit der Glucose-Ausscheidung; sie sind demzufolge auch nicht in der Lage, einmal aufgenommene Glucose-Antimetaboliten auszuscheiden. Die vom Holz und den Holzwerkstoffen durch die erfindungsgemäße Konservierung mit dem anzuwendenden Mittel oder Konzentrat aufgenommenen Glucose-Antimetaboliten oder Glucose-Antimetabolitengemische treten auch hier in Konkurrenz zur Glucose bzw. Glucose-6-phosphat, verhindern im Verlauf ihrer Anreicherung die Neubildung (Enzyminduktion) von Cellulasen und damit die Gewinnung von verwertbarer Glucose aus der Nahrung. Da aber der Einwärtstransport der Antimetaboliten als "passiver" Vorgang solange weitergeht, wie der Organismus Nahrung aufnimmt, schreitet auch die Kumulation des Antimetaboliten fort. Durch die anhaltende Anreicherung der Glucose-Antimetaboliten werden zunehmend alle von Glucose oder Glucose-6-phosphat ausgehenden, energieliefernden Stoffwechselwege blockiert. Dies hat zur Folge, daß die holzzerstörenden Insekten oder Pilze ihre Fettreserven abbauen müssen, um den Energiebedarf aller lebensnotwendigen Funktionen zu decken. Bei vollem Nahrungsangebot verliert der Organismus stark an Gewicht, schrumpft und stirbt ab.

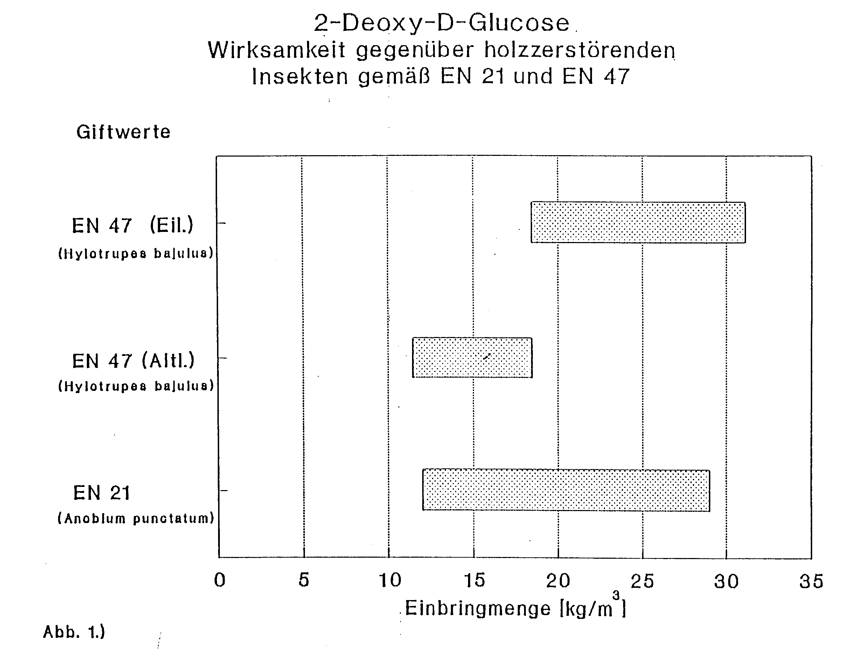

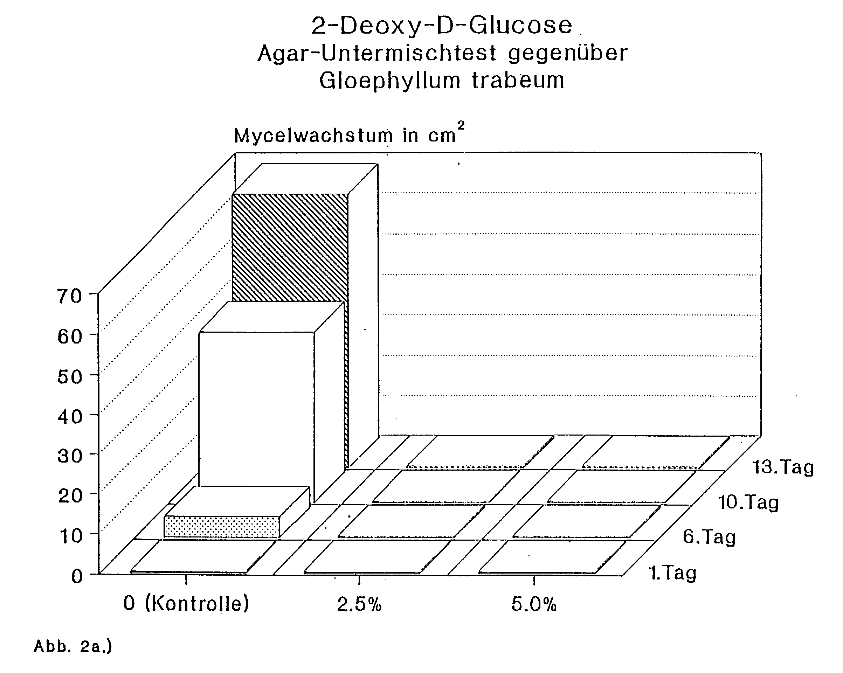

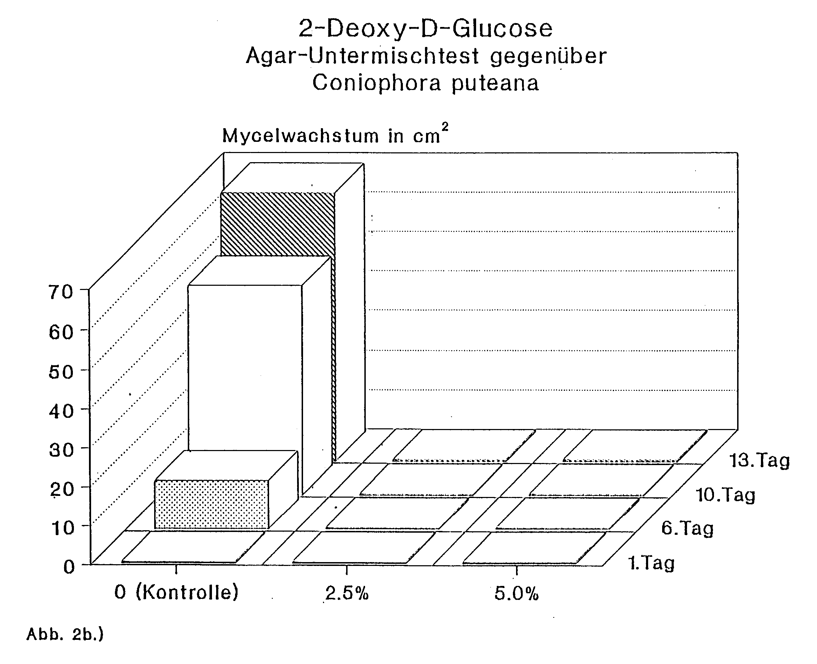

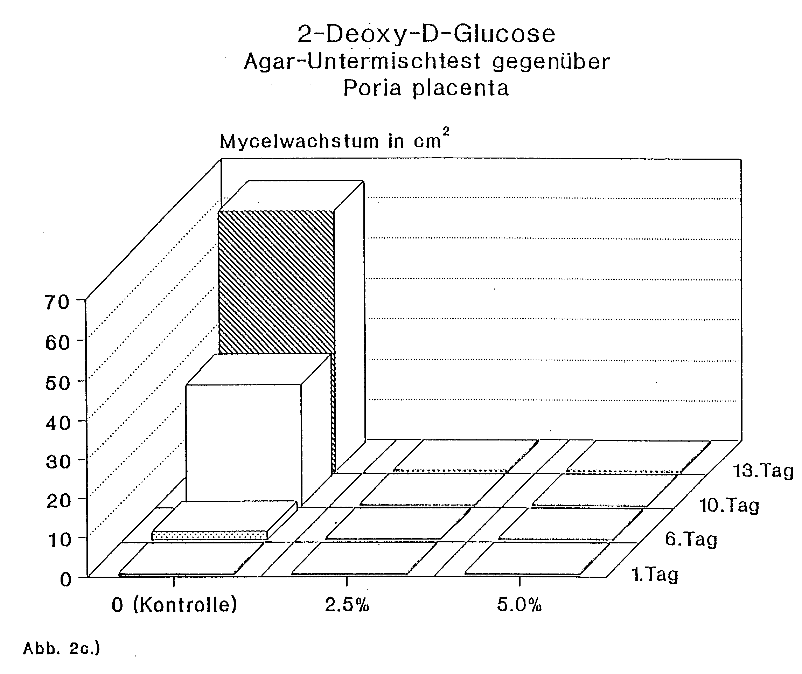

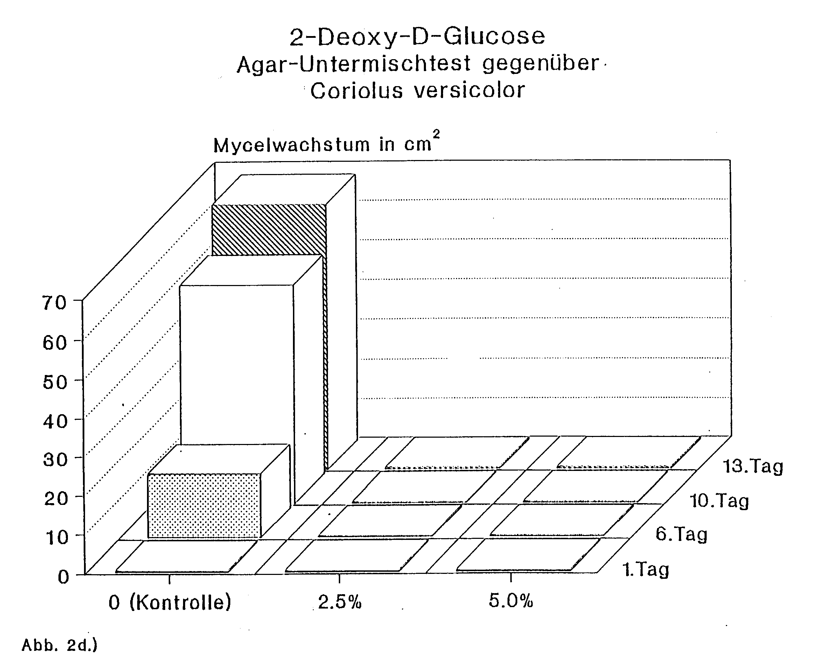

Die Wirksamkeit des erfindungsgemäßen Verfahrens unter Anwendung das die genannten Glucose-Antimetaboliten oder das Glucose-Antimetabolitengemisch enthaltenden Mittels gegenüber holzzerstörenden Insekten ist in Abbildung 1 beispielhaft für Hylotrupes bajulus (L.) gemäß DIN EN 47 und Anobium punctatum (De Geer) gemäß DIN EN 21 dargestellt; als Antimetabolit wurde 2-Deoxy-D-Glucose eingesetzt. Auf der Abszisse ist die Einbringmenge an dem Glucose-Antimetaboliten in kg/cbm Holz dargestellt. Die eingerahmten punktierten Bereiche zeigen die Wirksamkeit des Mittels in Abhängigkeit von der Einbringmenge an. Die Wirksamkeit des erfindungsgemäßen Verfahrens gegenüber holzzerstörenden Pilzen ist in Abbildungen 2 a bis 2 d beispielhaft für Gloephyllumtrabeum, Coniophora puteana, Coriolus versicolor und Poria placenta dargestellt. Als Prüfmethode wurde das Agar-Untermischverfahren eingesetzt, bei dem ein Malzextrakt-Nährboden mit der zu prüfenden Substanz (erfindungsgemäßes Mittel) gemischt wird und nach 14 Tagen Inkubationszeit das Myzelwachstum, ausgehend von einem, anfänglich in allen Versuchsansätzen gleichgroßen, Pilz-Impfstück gemessen wird. Die eingesetzten Konzentrationen beziehen sich auf 2,5 % und 5 % reinen Wirkstoff im Nährboden. Aus den Abbildungen ist deutlich die Unterdrückung des Mycelwachstums durch das erfindungsgemäße Verfahren ersichtlich.

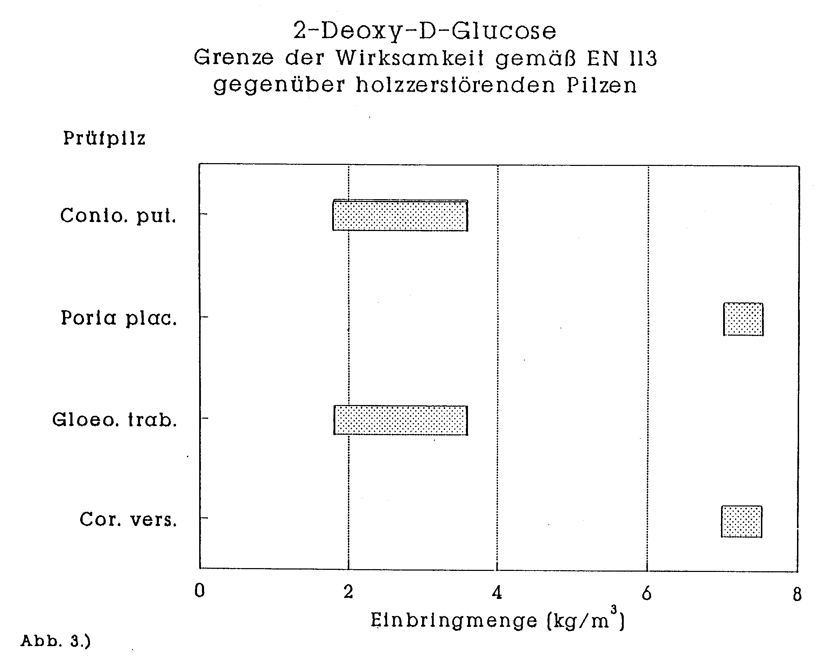

Zur weiteren Beurteilung der zu prüfenden Substanz (erfindungsgemäß einzusehendes Mittel) wurden die Grenzwerte nach DIN EN 113 ermittelt. Hierbei werden Prüfhölzer einer genormten Größe (15 x 25 x 50 mm) mit der in Wasser gelösten 2-Deoxy-D-Glucose im Vakuumverfahren vollimprägniert und anschließend dem Angriff holzzerstörender Basidiomyceten (s.o.) ausgesetzt. Nach 16 Wochen wird der durch die Pilze verursachte Gewichtsverlust der Hölzer ermittelt (Abbildung 3). Die eingerahmten punktierten Bereiche zeigen die Wirksamkeit des erfindungsgemäßen Verfahrens in Abhängigkeit von der Einbringmenge des anzuwendenden Mittels an.

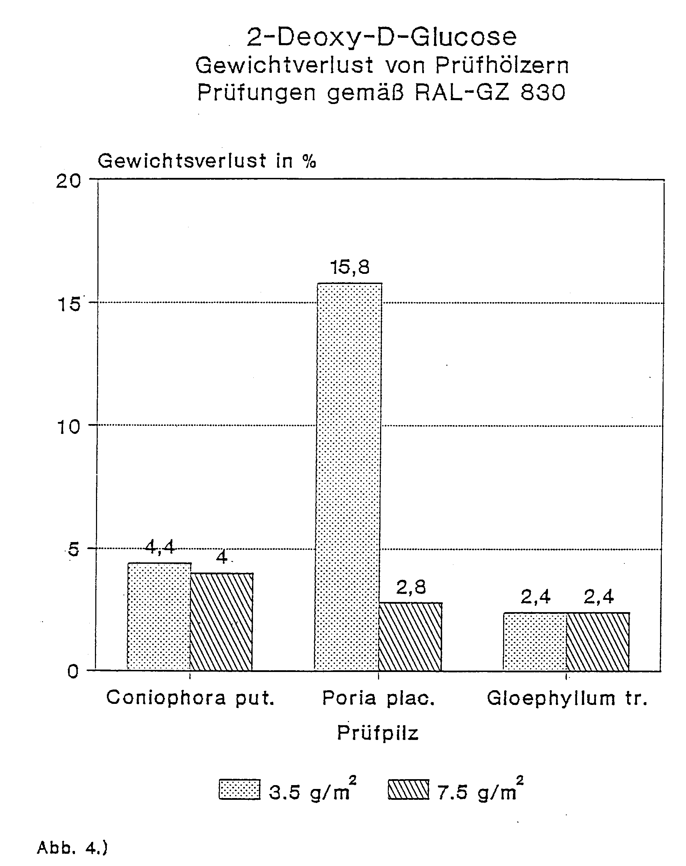

In Anlehnung an dieses Testverfahren wurde eine weitere Methode gemäß RAL-GZ 830 angewendet, bei der die Prüfhölzchen nach einer Oberflächenapplikation (Streichen) mit in Wasser gelöster 2-Deoxy-D-Glucose auf ihren Gewichtsverlust und ihren Zerstörungsgrad hin untersucht werden (Abbildung 4). Hieraus ist ersichtlich, daß das anzuwendende Mittel gegenüber holzzerstörenden Pilzen in Abhängigkeit von der Aufbringmenge wirksam ist.

Gemäß einer vorteilhaften Ausführungsform enthält das erfindungsgemäße Mittel oder Konzentrat Zusätze, die die Wirkung des oder der Glucose-Antimetaboliten gezielt unterstützen und/oder synergistisch steigern. Durch die erfindungsgemäße Zugabe von Cellulase-Inhibitoren, vorzugsweise Cellobiose, Phenyl-β-D-Glycosid oder Tannine, wird beispielsweise die Freisetzung von verwertbarer Glucose reduziert und so die Aufnahme und Kumulation des Antimetaboliten begünstigt. Vergleichbare Wirkungen können durch die erfindungsgemäße Zugabe von Hexokinase- und/oder Glucokinase-Inhibitoren, vorzugsweise Laurylsäure, Myristinsäure, Glucosamin, 6-Amino-6-Deoxy-D-Glucose oder N-Acetylglucosamin erzielt werden. Eine weitere Verbesserung der Glucose-Antimetabolitakkumulation durch Reduktion der Glucose-Freisetzung aus anderen Kohlenhydratquellen als Cellulose kann über die erfindungsgemäße Zugabe von Amylase-Inhibitoren, vorzugsweise von Acarbose, Cyclohexaamylose und Trestatin erreicht werden.

Gemäß einer besonderen Ausführungsform enthält das erfindungsgemäße Mittel oder Konzentrat weiterhin ein Insektizid oder Insektizidgemisch, vorzugsweise bestehend aus einem Pyrethroid, einem insektiziden Carbamat, einem Phosphorsäureester, einem Phosphonsäureester, einem Thiophosphorsäureester, einem Dithiophosphorsäureester oder Thionophosphorsäureester, einem chlorierten Kohlenwasserstoff und/oder Endosulfan oder aus zwei oder mehreren dieser Verbindungen, wodurch eine zusätzliche kontaktinsektizide Wirkung erreicht wird.

Als chlorierte Kohlenwasserstoffe werden bevorzugt Dieldrin, Aldrin und Lindan eingesetzt. Von den Pyrethroiden gelangen bevorzugt Allethrin, Cyclethrin, Furethrin, Tetramethrin, Bioresmethrin, Resmethrin, Permethrin, Cypermethrin, Cyfluthrin und Dekamethrin sowie andere synthetische oder natürliche insektizide Wirkstoffe auf Pyrethroidbasis zur Anwendung.

Von den insektiziden Carbamaten werden bevorzugt o-Isopropoxyphenyl-N-methyl-carbamat und/oder o-sec-Butylphenyl-N-methyl-carbamat eingesetzt.

Als insektizide Thionophosphorsäureester werden bevorzugt insektizide halogenierte oder halogengruppenfreie Thionophosphorsäureester der Formel: 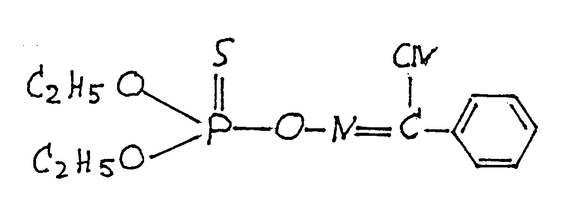
vorzugsweise (Diäthoxy-thiophosphoryloxyimino)-phenyl acetonitril bzw. 0,0-Diäthyl-0(α-cyanbenzylidenamino)-thionophosphat und/oder (Diäthoxy-thiophosphoryloxyimino)-2-Chlorphenylacetonitril und/oder andere Phosphorsäureester, vorzugsweise Dimethoxy-0-(6-nitro-m-tolyl)-phosphorothionat verwendet.

Als insektizide Carbamate können gleichfalls Alkoxyphenyl-N-alkylcarbamate der allgemeinen Formel 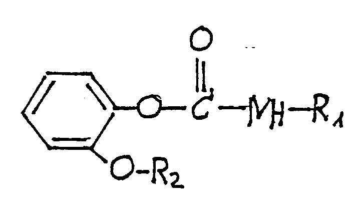
und/oder Alkylphenyl-N-alkylcarbamate der allgemeinen Formel 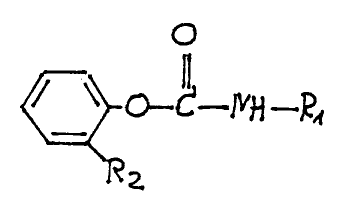
worin jeweils für R₁ ein Alkylrest mit 1-4 C-Atomen, vorzugsweise ein Methylrest steht und für R₂ ein Alkylrest mit 1-5 C-Atomen, vorzugsweise ein Alkylrest mit 3 oder 4 C-Atomen, steht, zur Anwendung gelangen.

Nach einer weiteren Ausführungsform können zusätzlich solche Biozide eingesetzt werden, die sowohl insektizide wie auch fungizide Eigenschaften enthalten, beispielsweise Borverbindungen.

Gemäß einer weiteren Ausführungsform enthält das erfindungsgemäße Mittel oder Konzentrat Zusätze, welche die fungizide Wirkung des oder der Kohlenhydrat-Antimetaboliten oder Kohlenhydrat-Antimetabolitengemische, vorzugsweise der Glucose-Antimetaboliten oder Glucose-Antimetabolitengemische gezielt unterstützen und/oder synergistisch steigern. Dies wird durch die erfindungsgemäße Zugabe von quaternären Amoniumverbindungen wie Benzalkoniumchlorid und/oder Triazolderivaten wie z.B.
Tebuconazol
(chemische Bezeichnung: 1-(4-Chlor-)phenyl-3-hydroxy-3-tert.-butyl-4-(1,2,4-triazol-1-yl)-butan),
Propiconazol
(chemische Bezeichnung: 1-[2-(2,4-Dichlorphenyl)-4-propyl-1,3-dioxolan-2-yl]-methyl-1H-1,2,4-triazol) oder
Azaconazol
(chemische Bezeichnung: 1-[2-(2,4-Dichlorphenyl)-1,3-dioxolan-2-yl]methyl-1H-1,2,4-triazol
erzielt.

Gemäß einer besonderen Ausführungsform enthält das erfindungsgemäße Mittel oder Konzentrat Zusätze, die die Auswaschbarkeit des oder der Glucose-Antimetaboliten oder -Antimetabolitengemische aus dem zu schützenden Material herabsetzen oder verhindern. Dies wird durch Zugabe von quaternären Ammoniumverbindungen, vorzugsweise Benzalkoniumchlorid, und/oder Bindemittel und/oder Fixierungsmittel erreicht. Als Bindemittel oder Fixierungsmittel werden vorzugsweise Acrylat-Hydrosole, wasserlösliche Alkydharze, wasseremulgierbare Alkydharze, alkohollösliche Alkydharze oder Acrylat-Versaticsäure-Vinylacetat-Copolymerisat verwendet.

Gemäß einer weiteren Ausführungsform enthält das erfindungsgemäße Mittel oder Konzentrat zusätzliche Lösungsvermittler und/oder Netzmittel und/oder Emulgatoren.

## Patentansprüche

1. Verfahren zum Konservieren von Holz, Holzwerkstoffen, Papier und anderen cellulosehaltigen Roh- und Werkstoffen gegenüber holzzerstörenden und/oder holzentwertenden und/oder celluloseabbauenden Organismen wie Bakterien, Pilzen, Termiten, Insektenlarven und Insekten, wobei man ein Mittel oder Konzentrat verwendet, welches einen oder mehrere Glucose-Antimetaboliten ausgewählt aus der Gruppe umfassend 5-Thio-D-Glucose, 2-Deoxy-D-Glucose, Nojirimycin, Nojirimycinbisulfid, 1-Deoxy-Nojirimycin und p-Nitrophenyl-α-D-Glucosid in mono-, di- oder polymerer Form enthält.

2. Verfahren nach Anspruch 1, dadurch gekennzeichnet, daß das anwendungsfertige Mittel
0,001 bis 50 Gew.-%, vorzugsweise
0,5 bis 10 Gew.-%
des oder der Glucose-Antimetaboliten und
mehr als 40 % Gew.-%, vorzugsweise
mehr als 80 Gew.-%
eines Lösungsmittels und/oder Verdünnungsmittels enthält.

3. Verfahren nach Anspruch 1 oder 2, dadurch gekennzeichnet, daß das Mittel oder Konzentrat zusätzlich einen oder mehrere Cellulase-Inhibitoren und/oder Hexokinase-Inhibitoren und/oder Glucokinase-Inhibitoren und/oder Amylase-Inhibitoren enthält.

4. Verfahren nach Anspruch 3, dadurch gekennzeichnet, daß das Mittel oder Konzentrat als Cellulase-Inhibitoren Cellobiose, Phenyl-β-D-Glycosid oder Tannine, als Hexokinase- und/oder Glucokinase-Inhibitoren Laurylsäure, Myristinsäure, Glucosamin, 6-Amino-6-Deoxy-D-Glucose oder N-Acetylglucosamin und als Amylase-Inhibitoren Trestatin, Acarbose oder Cyclohexaamylose enthält.

5. Verfahren nach einem oder mehreren der Ansprüche 1 bis. 4, dadurch gekennzeichnet, daß das Mittel oder Konzentrat zusätzlich einen oder mehrere insektizide Wirkstoffe, vorzugsweise synthetische Pyrethroide, enthält.

6. Verfahren nach einem oder mehreren der Ansprüche 1 bis 5, dadurch gekennzeichnet, daß das Mittel oder Konzentrat zusätzlich einen oder mehrere fungizide und/oder herbizide und/oder bakterizide Wirkstoffe, vorzugsweise Triazolderivate und/oder quaternäre Ammoniumverbindungen enthält.

7. Verfahren nach einem oder mehreren der Ansprüche 1 bis 6, dadurch gekennzeichnet, daß das Mittel oder Konzentrat zusätzlich Bindemittel und/oder Fixierungsmittel, vorzugsweise Acrylat-Hydrosole, wasserlösliche Alkydharze, wasseremulgierbare Alkydharze, alkohollösliche Alkydharze und/oder Acrylat-Versaticsäure-Vinylacetat-Copolymerisat enthält.

8. Verfahren nach einem oder mehreren der Ansprüche 1 bis 7, dadurch gekennzeichnet, daß das Mittel oder Konzentrat zusätzlich Lösungsvermittler und/oder Netzmittel und/oder Emulgatoren enthält.

9. Mittel oder Konzentrat zur Anwendung in einem Verfahren gemäß einem der Ansprüche 1 bis 8, umfassend einen oder mehrere Glucose-Antimetaboliten ausgewählt aus der Gruppe umfassend 5-Thio-D-Glucose, 2-Deoxy-D-Glucose, Nojirimycin, Nojirimycinbisulfid, 1-Deoxy-Nojirimycin und p-Nitrophenyl-α-D-Glucosid in mono-, di- oder polymerer Form, sowie zusätzlich einen oder mehrere Zusatzstoffe ausgewählt aus der Gruppe umfassend Cellulase-Inhibitoren, Hexokinase-Inhibitoren, Glucokinase-Inhibitoren, Amylase-Inhibitoren, insektizide Wirkstoffe, fungizide Wirkstoffe, herbizide Wirkstoffe, bakterizide Wirkstoffe, Bindemittel, Fixierungsmittel, Lösungsvermittler, Netzmittel und Emulgatoren.

## Claims

1. Method for the preservation of wood, wood materials, paper and other raw materials and working materials containing cellulose against wood-destroying organisms and/or organisms which reduce the value of wood and/or which break down cellulose, like bacteria, fungi, termites, insect larvae and insects, where an agent or concentrate is used which contains one or more glucose-antimetabolites selected from the group covering 5-thio-D-glucose, 2-deoxy-D-glucose, nojirimycin, nojirimycin bisulphide, 1-deoxy-nojirimycin and p-nitrophenyl-α-D-glucoside in mono-, di- or polymer form.

2. Method according to Claim 1, characterized in that the agent ready for use contains:
0.001 to 50% by weight, preferably
0.5 to 10% by weight
of the glucose-antimetabolite(s) and
more than 40% by weight, preferably
more than 80% by weight
of a solvent and/or a diluent.

3. Method according to Claim 1 or 2, characterized in that the agent or concentrate contains, in addition, one or more cellulase-inhibitors and/or hexokinase-inhibitors and/or hexokinase-inhibitors and/or glucokinase-inhibitors and/or amylase-inhibitors.

4. Method according to Claim 3, characterized in that the agent or concentrate contains as cellulase-inhibitors cellobiose, phenyl-β-D-glycoside or tannin, as hexokinase-inhibitor and/or glucokinase-inhibitor, lauric acid, myristic acid, glucosamine, 6-amino-6-deoxy-D-glucose or N-acetylglucosamine and, as amylase-inhibitors, trestatine, acarbose or cyclohexa-amylose.

5. Method according to one or more of Claims 1 to 4, characterized in that the agent or concentrate contains, in addition, one or more insecticidal active substances, preferably synthetic pyrethroids.

6. Method according to one or more of Claims 1 to 5, characterized in that the agent or concentrate contains, in addition, one or more fungicidal and/or herbicidal and/or bactericidal active substances, preferably triazole derivatives and/or quaternary ammonium compounds.

7. Method according to one or more of Claims 1 to 6, characterized in that the agent or concentrate contains, in addition, bonding agents and/or fixing agents, preferably acrylate-hydrosols, water-soluble alkyd resins, water-emulsifiable alkyd resins, alcohol-soluble alkyd resins and/or acrylate-versatic acid-vinyl-acetate-copolymerisate.

8. Method according to one or more of Claims 1 to 7, characterized in that the agent or concentrate contains, in addition, solubility promoters and/or wetting agents and/or emulsifiers.

9. Agent or concentrate for use in a method according to one of Claims 1 to 8, covering one or more glucose-antimetabolites selected from the group covering 5-thio-D-glucose, 2-deoxy-D-glucose, nojirimycin, nojirimycin bisulphide, 1-deoxy-nojirimycin and p-nitrophenyl-α-D-glucoside in mono-, di- or polymer form, and also, in addition, one or more additives selected from the group covering cellulase-inhibitors, hexokinase-inhibitors, glucokinase-inhibitors, amylase-inhibitors, insecticidal active substances, fungicidal active substances, herbicidal active substances, bactericidal active substances, bonding agents, fixing agents, solubility promoters, wetting agents and emulsifiers.

## Revendications

1. Procédé pour la conservation du bois, des matériaux en bois, du papier et d'autres matières brutes et matériaux contenant de la cellulose, envers des organismes détruisant et/ou dévalorisant le bois et/ou dégradant la cellulose, comme des bactéries, des champignons, des termites, des larves d'insectes et des insectes, procédé selon lequel on utilise un agent ou un concentré qui contient, sous forme monomère, dimère ou polymère, un ou plusieurs antimétabolites de glucose choisis dans l'ensemble comprenant le 5-thio-D-glucose, le 2-désoxy-D-glucose, la nojirimycine, le bisulfure de nojirimycine, la 1-désoxy-nojirimycine et le p-nitrophényl-α-D-glucoside.

2. Procédé selon la revendication 1, caractérisé en ce que l'agent prêt à l'emploi contient
0,001 à 50 %,
avantageusement 0,5 à 10 %
en poids du ou des antimétabolites de glucose et
plus de 40 % en poids,
avantageusement plus de 80 % en poids
d'un solvant et/ou d'un diluant.

3. Procédé selon la revendication 1 ou 2, caractérisé en ce que l'agent ou le concentré contient en outre un ou plusieurs inhibiteurs de la cellulase et/ou inhibiteurs de l'hexokinase et/ou inhibiteurs de glucokinase et/ou inhibiteurs d'amylase.

4. Procédé selon la revendication 3, caractérisé en ce que l'agent ou le concentré contient, comme inhibiteurs de la cellulase, du cellobiose, du phényl-β-D-glycoside ou des tanins, comme inhibiteurs de l'hexokinase et/ou de la glucokinase, de l'acide laurylique, de l'acide myristique, de la glucosamine, du 6-amino-6-désoxy-D-glucose ou de la N-acetylglucosamine et, comme inhibiteurs de l'amylase, de la trestatine, de l'acarbose ou du cyclohexaamylose.

5. Procédé selon une ou plusieurs des revendications 1 à 4, caractérisé en ce que l'agent ou le concentré contient en outre une ou plusieurs substances actives insecticides, avantageusement des pyréthroïdes de synthèse.

6. Procédé selon une ou plusieurs des revendications 1 à 4, caractérisé en ce que l'agent ou le concentré contient en outre une ou plusieurs substances actives fongicides et/ou herbicides et/ou bactéricides, avantageusement des dérivés du triazole et/ou des composés d'ammonium quaternaire.

7. Procédé selon une ou plusieurs des revendications 1 à 6, caractérisé en ce que l'agent ou le concentré contient en outre des liants et/ou des agents de fixation, avantageusement des hydrosols du type acrylate, des résines alkydes hydrosolubles, des résines alkydes émulsifiables dans l'eau, des résines alkydes solubles dans des alcools et/ou du copolymère d'acrylate/acide versatique/acétate de vinyle.

8. Procédé selon une ou plusieurs des revendications 1 à 7, caractérisé en ce que l'agent ou le concentré contient en outre un adjuvant de dissolution et/ou de l'agent de mouillage et/ou des émulsifiants.

9. Agent ou concentré à appliquer dans un procédé selon l'une des revendications 1 à 8, comprenant un ou plusieurs antimétabolites de glucose choisis dans l'ensemble comprenant le 5-thio-D-glucose, le 2-désoxy-D-glucose, la nojirimycine, le bisulfure de nojirimycine, la 1-désoxy-nojirimycine et le p-nitrophényl-α-D-glucoside, sous forme de monomère(s), de dimère(s) ou de polymère(s), et contenant en outre un ou plusieurs additifs choisis dans l'ensemble comprenant des inhibiteurs de la cellulase, des inhibiteurs de l'hexokinase, des inhibiteurs de glucokinase, des inhibiteurs d'amylase, des substances actives insecticides, des substances actives fongicides, des substances actives herbicides, des substances actives bactéricides, du liant, de l'agent de fixation, des adjuvants de dissolution, des agents de mouillage et des émulsifiants.
